# EUROPÄISCHE PATENTSCHRIFT

(11) **EP 3 772 295 B1**
(45) Veröffentlichungstag und Bekanntmachung des Hinweises auf die Patenterteilung: **02.11.2022**
(21) Anmeldenummer: 20187011.0
(22) Anmeldetag: 21.07.2020
(51) Int. Cl.: A47B 81/06, A47B 21/007, F16M 11/18

(54) **BILDSCHIRMAUFZUGSANLAGE ZUR ANORDNUNG IN MÖBELN ODER EINBAUMÖBELN**
SCREEN LIFT SYSTEM FOR ARRANGEMENT IN FURNITURE OR BUILT-IN FURNITURE
SYSTÈME DE LEVAGE D'ÉCRAN POUR LA DISPOSITION DANS LES MEUBLES OU LES MEUBLES INTÉGRÉS

(30) Priorität: 05.08.2019 DE 102019121103
(43) Veröffentlichungstag der Anmeldung: 10.02.2021
(73) Patentinhaber: Okugi GmbH, 28757 Bremen (DE)
(72) Erfinder: Schröter, Uwe, 27721 Ritterhude (DE)
(74) Vertreter: Meyer, Ralph

(56) Entgegenhaltungen:
- WO-A1-2016/205556
- DE-A1-102011 000 705

## Beschreibung

Die Erfindung betrifft eine Bildschirmaufzugsanlage für Flachbildschirme zur Anordnung in Möbeln oder Einbaumöbeln.

Bildschirmaufzugsanlagen für Flachbildschirme dienen dem Ein- und Ausfahren von Flachbildschirmen, um den Bildschirm zum Gebrauch auszufahren und - wenn er nicht mehr benötigt wird - in eine Ruheposition einzufahren. Hierzu weisen Bildschirmaufzugsanlagen einen in Aufzugsrichtung beweglich angeordneten Bildschirmträger auf, welcher über einen Antriebsmotor bewegbar ist. Die Ruheposition ist dabei innerhalb eines Möbels oder Einbaumöbels beziehungsweise einer Wandverkleidung vorgesehen, so dass der Flachbildschirm nur bei Bedarf und auf Wunsch sichtbar ist.

Bildschirmaufzugsanlagen werden nicht nur aus ästhetischen Gründen eingesetzt, sondern insbesondere auch zur Raumersparnis durch entsprechende Wohnraumeinrichtung. Wird der Flachbildschirm nämlich in die Ruheposition gefahren, so wird an seiner Stelle ein Raum - beziehungsweise eine Fläche - zur anderweitigen Gestaltung und Nutzung freigegeben. Dies ist vor allem bei der Einrichtung von kleinen Räumen wichtig, beispielsweise bei der Ausstattung von Yachten, wenn in dem zur Verfügung stehenden Raum eine Vielzahl von Einrichtungen untergebracht werden müssen.

DE 20 2009 000 289 U1 offenbart eine Liftvorrichtung für Flachbildschirme, welche einen Flachbildschirm durch vertikale Lageveränderung so in ein Möbel versenkt, dass der Flachbildschirm nicht mehr sichtbar ist. Die Liftfunktion erfolgt bei der bekannten Liftvorrichtung mechanisch oder elektromotorisch. Über eine Funksteuerung oder Fernbedienung kann der Benutzer den Flachbildschirm zwecks seiner Inbetriebnahme aus dem Möbel ausfahren. Die bekannte Liftvorrichtung sieht hierfür eine Rollladenwelle von geeigneter Länge vor, welche mit einem Funk- Rohrmotor kombiniert in einem Möbel verdeckt gelagert wird. Auf der Rollladenwelle befinden sich links und rechts angeordnet Gurt- oder Seilspulen zur Auf- oder Abwicklung von Liftgurten, -seilen oder - ketten. An den Liftgurten ist eine Halteplatte zur Aufnahme eines Flachbildschirms so befestigt, dass diese Halteplatte mit dem gewünschten Hub in ihrer vertikalen Lage durch Drehbewegung der Rollladenwelle so verändert werden kann, dass der Flachbildschirm einerseits in seiner unteren Endlage vom Mobiliar optisch verdeckt angeordnet ist und andererseits in seiner Gebrauchslage, also optisch unsichtbar, geliftet werden kann.

DE 198 12 959 A1 offenbart eine Hubvorrichtung zum Einbau in Möbeln mit einer horizontalliegenden Plattform, an der jeweils ein Ende einer Mehrzahl von flexiblen Zugseilen angeschlagen ist. Die Hubvorrichtung weist vertikale Führungsschienen auf, zum vertikalen Führen der Plattform bei deren Hin- und Her-Bewegung, welche an vertikal angeordneten Stelen angebracht sind. Im oberen Endbereich der jeweiligen Führungsschiene ist eine Umlenkrolle angeordnet, wobei jeweils ein freies Ende der Zugseile an der horizontalen Plattform befestigt ist und das Zugseil auf der jeweils anderen Seite der jeweiligen Umlenkrolle auf einer Seiltrommel auf- und abwickelbar ist. Die Seiltrommel wird von einem Antriebsmotor angetrieben.

Eine Aufzugseinrichtung mit einer hoch- und runterfahrbaren Aufzugsplatte offenbart auch GB 2 287 641 A. Mit der Aufzugsplatte können auf ihr abgelegte Produkte zur Ansicht aus dem Behälter ausgefahren und zur Aufbewahrung eingefahren werden. Die Aufzugseinrichtung umfasst dabei Seilzüge, welche im Bereich der Ecken der Aufzugsplatte befestigt sind. Die Seilzüge sind jeweils über oben liegende Umlenkrollen geführt, wobei am jeweils anderen Ende der Seilzüge Gegengewichtsboxen hängen.

DE 20 2016 103 788 U1 offenbart eine Bildschirmaufzugsanlage für Flachbildschirme zur Anordnung in Möbeln oder Einbaumöbeln mit einem in Aufzugsrichtung beweglich angeordneten Bildschirmträger, an dem der Flachbildschirm befestigt und mit dem Bildschirmträger bewegbar ist. Die bekannte Bildschirmaufzugsanlage weist eine Ausfahreinrichtung mit zwei parallel angeordneten Hubsäulen auf. Die Hubsäulen können dabei teleskopierbar ausgestaltet sein. Über die Hubsäulen, welche mittels einer elektrischen Antriebseinheit in Längsrichtung der Hubsäulen ein- und ausfahrbar ist, wird der Bildschirmträger und damit der an dem Bildschirmträger montierte Flachbildschirm aus der Ruheposition aufgezogen oder eingefahren.

Aus DE 10 2011 000 705 A1 ist eine Höhenverstellvorrichtung zur Anordnung an einem Möbelstück mit einem vertikal verschieblich angeordneten Montageschlitten zur Aufnahme eines Fernsehgeräts bekannt. Der Montageschlitten ist über einen Elektromotor mittels Antriebsriemen 9 antreibbar. Dem verschieblichen Montageschlitten der bekannten Vorrichtung sind zum Gewichtsausgleich Zugfedern zugeordnet, welche mit dem feststehenden Grundkörper 3 verbunden sind.

An die Qualität von Bildschirmaufzugsanlagen werden in vielen Anwendungsfällen und Märkten, beispielsweise in Hoteleinrichtungen oder bei Yachtausstattungen, zunehmend höhere Anforderungen gestellt. So wird regelmäßig gefordert, dass die Bildschirmaufzugsanlage möglichst leise läuft und idealerweise kaum hörbar ist.

DE 20 2010 006 908 U1 offenbart ein TV-Board mit einem Möbelstück, welches für die Aufnahme von TV-Geräten oder weiteren Multimedia-Geräten vorgesehen ist. Dabei sind zwei gegenläufige senkrechte Aufzüge vorgesehen, welche mittels eines Schienensystems ausfahrbar und dabei zwangsläufig der jeweils andere Aufzug gleichzeitig einfahrbar sind. Der Ausfahrmechanismus umfasst eine Gliederkette, welche über ein Zahnrad hin- und herbewegbar ist und an ihren Enden jeweils mit einer ausfahrbaren Schiene verbunden ist. Die Gliederkette läuft dabei jeweils über Umlenkrollen, die sich senkrecht über den Schienen befinden.

Der vorliegenden Erfindung liegt die Aufgabe zugrunde, die gattungsgemäße Bildschirmaufzugsanlage für Flachbildschirme zur Anordnung in Möbeln oder Einbaumöbeln derart weiterzubilden, dass sie bei möglichst geringem Energiebedarf möglichst leise betreibbar ist und entsprechend den grundsätzlichen Anforderungen der Aufnahme von Flachbildschirmen wenig Bauraum benötigen.

Diese Aufgabe wird erfindungsgemäß durch eine Bildschirmaufzugsanlage für Flachbildschirme mit den Merkmalen des Anspruchs 1 gelöst.

Gemäß der Erfindung ist dem Bildschirmträger, welcher in Aufzugsrichtung beweglich angeordnet ist, eine Gewichtsausgleichsvorrichtung zugeordnet. Darunter ist eine Vorrichtung zu verstehen, welche der Gewichtskraft des Bildschirmträgers eine Kraft entgegensetzt. Wird die Ausgleichskraft, welche die Gewichtsausgleichsvorrichtung der Gewichtskraft des Bildschirmträgers entgegensetzt, auf die Gesamtgewichtskraft des Bildschirmträgers mit montiertem Flachbildschirm abgestimmt, befindet sich der Bildschirmträger ohne Fremdeinwirkung in einer ausgeglichenen Ruhelage. Bei der Bewegung des Flachbildschirms in Aufzugsrichtung muss der Antriebsmotor kaum Hebearbeit verrichten, sondern lediglich Energie zum Beschleunigen und Bremsen des Bildschirmträgers aufbringen. Der Antrieb der Bildschirmaufzugsanlage kann entsprechend dem erfindungsgemäß reduzierten Energiebedarf klein ausgelegt werden, um den geringen Energiebedarf zur Bewegung des Bildschirmträgers aufzubringen. Dadurch wird auch die Geräuschemission gesenkt. Zudem werden durch die Umgehung leistungsstarker und damit teurer Antriebsaggregate die Kosten der Herstellung der Bildschirmaufzugsanlage gesenkt.

Mit einfachen und gleichzeitig zuverlässig arbeitenden Mitteln wird eine der Gewichtskraft des Bildschirmträgers entgegengesetzte Kraft durch einen in Aufzugsrichtung beweglichen Ballastkörper bereitgestellt, welcher das Gewicht des Bildschirmträgers kompensiert.

Die Gewichtsausgleichsvorrichtung weist mindestens ein biegeschlaffes Zugelement auf, welches über eine oben liegende Umlenkrolle geführt ist. An dem biegeschlaffen Zugelement, beispielsweise einem Seil, einer Kette oder einem Riemen, hängt auf einer Seite der Umlenkrolle der Bildschirmträger und auf der anderen Seite der Ballastkörper, welcher somit entgegengesetzt dem Bildschirmträger bewegbar ist. Das Gesamtgewicht der beweglichen Teile, also dem Bildschirmträger mit daran montiertem Flachbildschirm einerseits sowie andererseits dem Ballastkörper, wird über die festliegende Umlenkrolle aufgenommen. Über die festliegende Umlenkrolle wird das kraftführende Zugelement sicher und stabil geführt, wobei der Antriebsmotor lediglich eine geringe Energie zum Bewegen des Flachbildschirms aufbringen muss.

Die Erfindung hat erkannt, dass bei sehr geringem Platzbedarf, insbesondere geringer Tiefe der Vorrichtung, ein ruhiger Lauf einer dauerhaft zuverlässig wirkende Gewichtsausgleichsvorrichtung gegeben ist, wenn das jeweilige Zugelement umlaufend ausgebildet ist und über die oben liegende Umlenkrolle und eine unten liegende Umlenkrolle läuft. Das umlaufende Zugelement wird dabei zwischen der oben liegenden Umlenkrolle und der unten liegenden Umlenkrolle gespannt und sorgt für stabile Laufruhe. Der Bildschirmträger und damit auch der an dem Bildschirmträger befestigte Flachbildschirm werden an einem ersten Trum des Zugelements gehalten, während der zweite Trum den Ballastkörper trägt.

In der erfindungsgemäßen Bildschirmaufzugsanlage wird die erforderliche kompakte und flache Bauweise dadurch gefördert, dass der Antriebsmotor eine der Umlenkrollen eines Zugelements antreibt. Dabei reicht aufgrund der erfindungsgemäßen Gewichtsausgleichsvorrichtung ein einziger Antriebsmotor aus, um das Zugelement über die Umlenkrollen zu verschieben und damit den Bildschirmträger einzustellen.

Vorzugsweise wird das Gewicht des Ballastkörpers auf das Gesamtgewicht einer aus Bildschirmträger und Flachbildschirm gebildeten Baugruppe abgestimmt, wodurch sich die in Aufzugsrichtung bewegliche Baugruppe aus Bildschirmträger und Flachbildschirm in einer Ruhelage befindet. Der Ballastkörper stellt dabei dauerhaft eine gleichbleibende Gegenkraft zur Kompensation der gleichfalls nicht veränderlichen Gewichtskraft der beweglichen Baugruppe aus Bildschirmträger und Flachbildschirm bereit.

Eine stabile und gleichmäßige Bewegung des Flachbildschirms in Aufzugsrichtung ist möglich, wenn der Bildschirmträger und der Ballastkörper jeweils in Vertikalführungen angeordnet sind. Die Vertikalführungen sind dabei zu beiden Seiten des Bildschirmträgers beziehungsweise des Ballastkörpers angeordnet. Vorteilhaft weist die Gewichtsausgleichsvorrichtung zwei parallel angeordnete Zugelemente auf. Vorzugsweise sind die Zugelemente mit ihren jeweiligen Umlenkrollen dabei jeweils benachbart den außenliegenden Seiten des Bildschirmträgers angeordnet. In dieser Ausführungsform sind die vertikalen Führungen an vertikalen Stützen oder Trägern eines Chassis der Bildschirmaufzugsanlage angeordnet. Dabei sind im Bereich des oberen Endes der Führungen jeweils die oben liegenden Umlenkrollen der Zugelemente an den Trägern, beziehungsweise an den Stützen, befestigt. Auf diese Weise wird die Gewichtskraft des Flachbildschirms, beziehungsweise der aus Flachbildschirm und Bildschirmträger gebildeten Baugruppe, sowie dem Gegengewicht über die Umlenkrolle von der Stütze getragen. An den vertikalen Trägern der Bildschirmaufzugsanlage sind jeweils zwei parallele Vertikalführungen ausgebildet, in denen einerseits der balkenförmige Bildschirmträger läuft und andererseits der ebenfalls balkenförmig ausgebildete Ballastkörper in Aufzugsrichtung geführt ist.

Eine kompakte Bauweise der Bildschirmaufzugsanlage ist gegeben, wenn der Ballastkörper balkenförmig ausgebildet ist und quer bezüglich der Aufzugsrichtung angeordnet ist. Der Ballastkörper liegt somit in Einbaulage entsprechend der Querrichtung des Flachbildschirms und wird an seinen Enden in den Vertikalführungen zwangsgeführt. Der balkenförmige Ballastkörper kann somit über die Breite eines Innenraums der Bildschirmaufzugsanlage platzsparend untergebracht werden, welcher aufgrund der erforderlichen beziehungsweise gewünschten Größe des Flachbildschirms ohnehin bereitgestellt werden muss. Der Ballastkörper benötigt aufgrund der lang gesteckten Balkenform nur eine vergleichsweise sehr geringe Tiefe um die zum Gewichtsausgleich gewünschte Masse bereit zu stellen, so dass er auch in dem möglichst wenig tiefen Bauraum der Bildschirmaufzugsanlage für Flachbildschirme angeordnet werden kann.

Vorteilhaft werden die parallel angeordneten Zugelemente mit ihren jeweiligen Umlenkrollen jeweils benachbart den außenliegenden Seiten des Bildschirmträgers angeordnet, so dass die Zugelemente frei laufen können und der Flachbildschirm zwischen den Zugelementen frei bewegbar ist. Die in dieser Ausführungsform vorgesehene Anordnung der Zugelemente benachbart den außenliegenden Seiten des Bildschirmträgers wird mit der sehr stabilen Halterung der jeweiligen Umlenkrollen an den oberen Enden der vertikalen Stützen gewährleistet.

Das Zugelement ist ein Seilzug, ein Kettenzug oder, in einer besonders dauerhaften und daher vorteilhaften Ausführungsform, ein Riemen. Ein Riemen, insbesondere ein Zahnriemen, als Zugelement ist besonders präzise in die gewünschte Position des Flachbildschirms fahrbar, so dass der Bildschirmträger und damit der Flachbildschirm auch in beliebige Auszugspositionen zwischen den beiden Endstellungen einstellbar ist.

Eine stufenlose Einstellbarkeit der Position des Bildschirmträgers ist in einer besonders vorteilhaften Ausführungsform dadurch gewährleistet, dass der Antriebsmotor ein Schrittmotor ist. Über den Schrittmotor kann durch eine bestimmte Anzahl von Schritten, beziehungsweise Drehwinkelschritten, des Schrittmotors die vom Benutzer der Bildschirmaufzugsanlage gewählte Auszugsstellung stufenlos eingestellt werden.

Der Gleichlauf mehrerer paralleler Zugelemente wird in einer vorteilhaften Ausführungsform der Erfindung dadurch gefördert, dass die vom Antriebsmotor angetriebene Umlenkrolle und die Umlenkrolle des parallelen Zugelements an einer gemeinsamen umlaufenden Achse angeordnet sind. In einer weiteren Ausführungsform sind bei allen Zugelementen die jeweils unten liegenden Umlenkrollen und die oben liegenden Umlenkrollen durch eine gemeinsame umlaufende Achse miteinander verbunden, so dass alle korrespondierenden Umlenkrollen in einen Synchronlauf gezwungen sind.

Der Antriebsmotor treibt vorteilhaft eine unten liegende Umlenkrolle an und kann so platzsparend unterhalb des Bildschirmträgers in einem Gehäuse der Bildschirmaufzugsanlage angeordnet werden.

In einer weiteren Ausführungsform der Erfindung wird ein besonders leises Betriebsverhalten der Bildschirmaufzugsanlage durch Anordnung einer in Aufzugsrichtung liegenden Gewindespindel gewährleistet, über welche der Antriebsmotor auf den Bildschirmträger wirkt.

Eine besonders kraftvolle Betätigung der Bildschirmaufzugsanlage ist gewährleistet in einer Aufführungsform der Erfindung, wenn der Bildschirmträger durch einen auf das Zugelement wirkenden Antriebsmotor (Riemenmotor) und einen über eine Gewindespindel wirkenden weiteren Antriebsmotor (Spindelmotor) angetrieben wird. Auch der Spindelmotor, welcher über die vertikal angeordnete Gewindespindel auf den Bildschirmträger wirkt, ist vorteilhaft ein präzise einstellbarer Schrittmotor.

Ausführungsbeispiele der Erfindung sind nachstehend anhand der Zeichnung näher erläutert. Es zeigen:
- Fig.1: eine perspektivische Ansicht eines Einbaumöbels mit einem ersten Ausführungsbeispiel einer Bildschirmaufzugsanlage,
- Fig.2: eine Frontansicht der Bildschirmaufzugsanlage gemäß Fig. 1,
- Fig.3: eine Seitenansicht der Bildschirmaufzugsanlage gemäß Fig. 1 und Fig. 2
- Fig.4: eine perspektivische Ansicht des Antriebs der Bildschirmaufzugsanlage gemäß Fig. 1 bis Fig. 3,
- Fig.5: eine perspektivische Ansicht eines Einbaumöbels mit einem zweiten Ausführungsbeispiel einer Bildschirmaufzugsanlage,
- Fig.6: eine Frontansicht der Bildschirmaufzugsanlage gemäß Fig. 5.

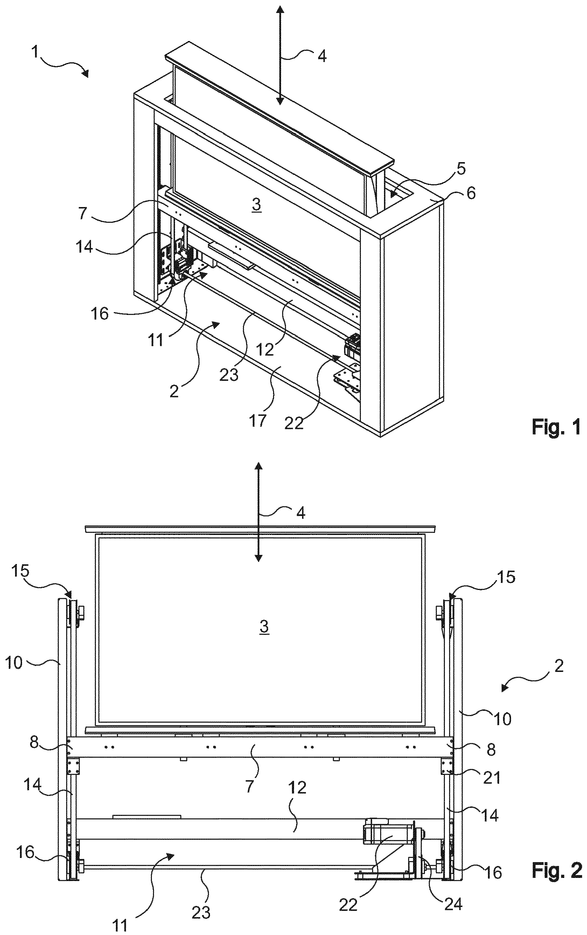

Fig. 1 zeigt eine perspektivische Darstellung eines Einbaumöbels 1 mit einer Bildschirmaufzugsanlage 2, welche dazu dient, einen Flachbildschirm 3 aus dem Einbaumöbel 1 in Aufzugsrichtung 4 auszufahren, beziehungsweise wieder einzufahren. In einer unteren Ruhestellung befindet sich der Flachbildschirm 3 vollständig innerhalb des Korpus des Einbaumöbels 1. Über die Bildschirmaufzugsanlage 2 wird der Flachbildschirm 3 in Aufzugsrichtung 4 durch eine Öffnung 5 im Deckel 6 des Einbaumöbels 1 ausgefahren. In der oberen Ruhestellung ist der Flachbildschirm 3 vollständig aus dem Einbaumöbel 1 ausgefahren und für die Anzeige visueller Darstellungen bereit.

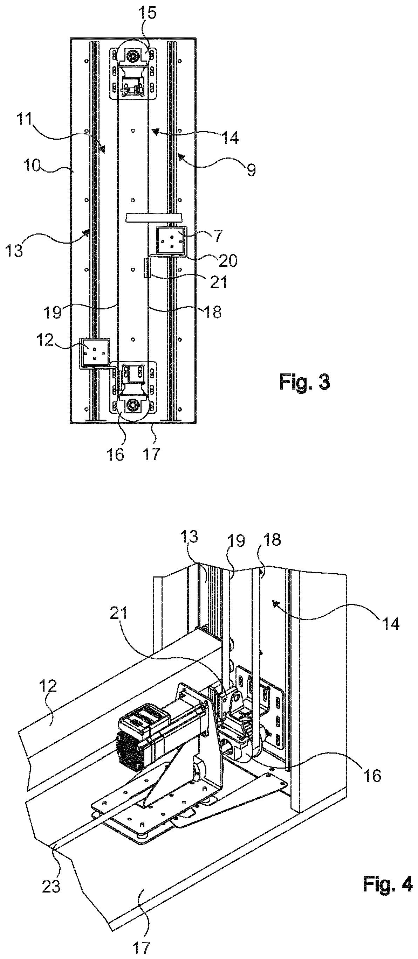

Die Bildschirmaufzugsanlage 2 wird nachstehend unter weiterem Bezug auf die Frontdarstellung der Bildschirmaufzugsanlage 2 sowie einer Seitenansicht der Bildschirmaufzugsanlage gemäß Fig. 3 näher erläutert. Für gleiche Bauteile sind dabei jeweils gleiche Bezugszeichen verwendet.

Die Bildschirmaufzugsanlage 2 weist einen in Auszugsrichtung beweglich angeordneten Bildschirmträger 7 auf, welcher den Flachbildschirm 3 trägt. Der Bildschirmträger 7 ist balkenförmig ausgebildet und wird an seinen Enden 8 in Vertikalführungen 9 (Fig. 3) geführt. Die Vertikalführungen 9 sind dabei in vertikalen Stützen 10 ausgebildet, welche in einem derartigen Abstand zueinander parallel angeordnet sind, dass in ihrem Zwischenraum der Bildschirmträger 7 und der Flachbildschirm 3 aufgenommen ist. Über die Dimensionierung der Abstände der Stützen 10 sowie der Länge des balkenförmigen Bildschirmträgers 7 ist die aufnehmbare Größe des Flachbildschirms 3 bestimmt.

Dem Bildschirmträger 7 ist eine Gewichtsausgleichsvorrichtung 11 zugeordnet, welche einen das Gewicht des Bildschirmträgers 7 kompensierenden und in Aufzugsrichtung 4 beweglichen Ballastkörper 12 aufweist. Der Ballastkörper 12 ist ähnlich dem Bildschirmträger 7 balkenförmig ausgebildet und quer bezüglich der Aufzugsrichtung 4 zwischen den Stützen 10 angeordnet. Wie der Bildschirmträger 7 ist auch der Ballastkörper 12 in einer Vertikalführung 13 angeordnet. Die Vertikalführung 13 für den Ballastkörper 12 und die Vertikalführung 9 für den Bildschirmträger 7 sind parallel zueinander und voneinander beabstandet an den einander zugewandten Innenseiten der Stützen 10 ausgebildet. Über die Vertikalführungen 9, 13 sind sowohl der Ballastkörper 12 als auch der Bildschirmträger 7 in Aufzugsrichtung 4 hin und her bewegbar aufgenommen. Sowohl der Ballastkörper 12 als auch der Bildschirmträger 7 werden mit einer geringen Tiefe im Verhältnis zur Breite gestaltet, so dass eine flache Bauweise der Bildschirmaufzugsanlage 2 für Flachbildschirme gegeben ist.

Die Gewichtsausgleichsvorrichtung 11 umfasst biegeschlaffe Zugelemente 14, welche jeweils über eine obenliegende Umlenkrolle 15 geführt sind, wobei an jedem Zugelement 14 einerseits der Bildschirmträger 7 und andererseits der Ballastkörper 12 hängt. Mit einer Aufwärtsbewegung des Bildschirmträgers 7 mit dem darauf aufgenommenen Flachbildschirm 3 geht stets eine entgegengesetzt gerichtete Abwärtsbewegung des Ballastkörpers 12 einher. Die Zugelemente 14 sind im gezeigten Ausführungsbeispiel als Riemen ausgebildet. In weiteren Ausführungsbeispielen sind Seile oder Ketten als Zugelemente 14 vorgesehen, deren jeweils oben liegende Umlenkrollen 15 im oberen Bereich der jeweiligen Stützen 10 drehbar befestigt sind. Das Paar von zwei parallel angeordneten Zugelementen 14 liegen somit benachbart den außenliegenden Seiten des Bildschirmträgers, so dass der Bildschirmträger 7 und der darauf angeordnete Flachbildschirm freibewegbar sind. Die Zugelemente 14 sind umlaufend ausgebildet, das heißt als geschlossene Riemen ausgeführt und laufen über die oben liegende Umlenkrolle 15 und eine unten liegende Umlenkrolle 16. Die unten liegende Umlenkrolle 16 ist im Bereich des Bodens 17 der Bildschirmaufzugsanlage 2 angeordnet.

Die Zugelemente 14 sind zwischen den Umlenkrollen 15, 16 gespannt. Der Bildschirmträger 7 hängt dabei an einem ersten Trum 18 des jeweiligen Zugelements 14, während der Ballastkörper 12 am zweiten Trum 19 des jeweiligen Zugelements 14 hängt. Zur Befestigung des Bildschirmträgers 7 an seinem zugeordneten Trum 18 sowie zur Befestigung des Ballastkörpers 12 an seinem zugeordneten Trum 19 sind Schellen 20 vorgesehen, welche den jeweils balkenförmigen Bildschirmträger 7, beziehungsweise Ballastkörper 12, umgreifen und aufnehmen und selbst mit einer Klemmvorrichtung 21 an dem jeweiligen Trum 18, 19 festgelegt sind. Der Abstand der Vertikalführungen 9, 13 ist derart bestimmt, dass die Umlenkrollen 15, 16 sowie die beide Trume 18, 19 im Zwischenraum der Vertikalführungen 9, 13 liegen.

Der Ballastkörper 12 weist ein größeres Gewicht als der Bildschirmträger 7 auf. Das Gewicht des Ballastkörpers 12 ist vorteilhaft auf das Gesamtgewicht einer aus Bildschirmträger 7 und Flachbildschirm 3 gebildeten Baugruppe abgestimmt im Hinblick auf einen möglichst idealen Gewichtsausgleich. Aufgrund des Gewichtsausgleichs des Bildschirmträgers 7 muss eine Antriebseinheit (Fig. 4) Energie lediglich zur Beschleunigung des Bildschirmträgers aufbringen.

Die Antriebseinheit besteht im Wesentlichen aus einem Antriebsmotor 22, welcher im gezeigten Ausführungsbeispiel ein Schrittmotor ist. Der Antriebsmotor 22 ist im Bereich des Bodens 17 der Bildschirmaufzugsanlage 2 angeordnet und treibt mindestens eine der unten liegenden Umlenkrollen 16 an. Im gezeigten Ausführungsbeispiel sind die unten liegenden Umlenkrollen 16 beider Zugelemente 14 an einer gemeinsamen umlaufenden Achse 23 angeordnet und sind somit kinematisch miteinander gekoppelt. Der Antriebsmotor 22 wirkt im gezeigten Ausführungsbeispiel über ein Getriebe 24 (Fig. 2) auf die Achse 23 und überträgt somit seine Antriebsleistung auf die Zugelemente 14.

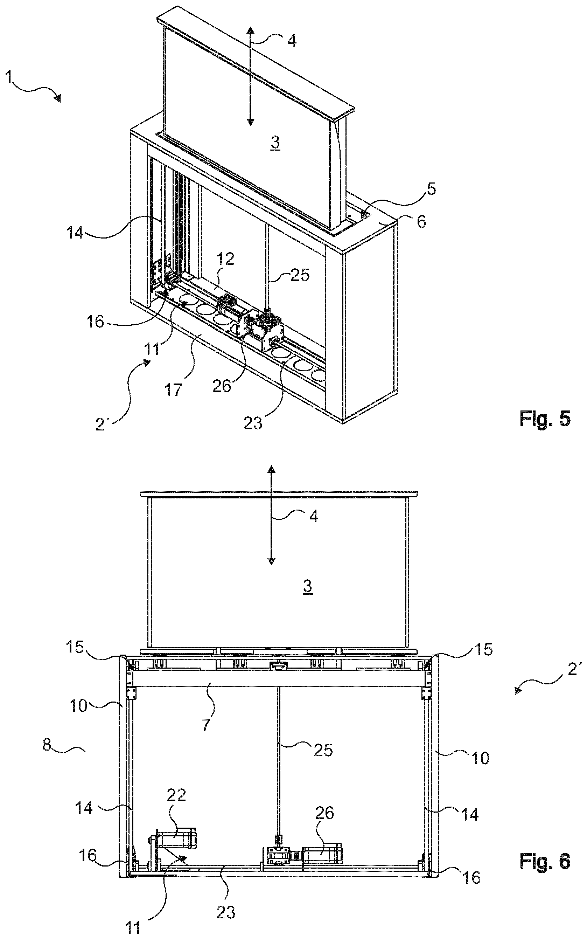

Fig. 5 und Fig. 6 zeigen ein weiteres Ausführungsbeispiel einer Bildschirmaufzugsanlage 2', deren grundsätzlicher Aufbau der Bildschirmaufzugsanlage 2 gemäß Fig. 1 bis Fig. 4 entspricht. Es wird daher auf die Beschreibung der Bildschirmaufzugsanlage 2 in Fig. 1 bis Fig. 4 Bezug genommen, wobei die gleichen Bezugszeichen der jeweils gleichen Bauteile auch in Fig. 5 und Fig. 6 eingetragen sind.

Im Unterschied zum Ausführungsbeispiel der Bildschirmaufzugsanlage 2 in Fig. 1 bis Fig. 4 weist die Bildschirmaufzugsanlage 2' gemäß Fig. 5 und Fig. 6 eine in Aufzugsrichtung 4 liegende Gewindespindel 25 auf, über die ein Antriebsmotor 26 auf den Bildschirmträger 7 wirkt. Der Antriebsmotor 26 (Spindelmotor) der Gewindespindel 25 ist im Bereich des Bodens 17 angeordnet und treibt die Gewindespindel 25 drehend an. Am Bildschirmträger 7 ist die Gewindespindel 25 in einer innenverzahnten Hülse aufgenommen, so dass die Gewindespindel 25 mit ihrem Gewinde den Bildschirmträger 7 bewegen kann.

Im gezeigten Ausführungsbeispiel der Bildschirmaufzugsanlage 2' sind zwei Antriebseinheiten vorgesehen, nämlich zum einen der Antriebsmotor 26 für die Gewindespindel 25 und zusätzlich ein Antriebsmotor 22, welcher auf die Zugelemente 14 der Gewichtsausgleichsvorrichtung 11 wirkt. In einem weiteren, nicht dargestellten Ausführungsbeispiel einer Bildschirmaufzugsanlage ist ausschließlich ein Antrieb des Bildschirmträgers 7 über eine Gewindespindel 25 und einen auf die Gewindespindel 25 wirkenden Antriebsmotor 26 vorgesehen.

Sowohl der Antriebsmotor 22 der Zugelemente 14 als auch der Antriebsmotor 26 für die Gewindespindel 25 sind vorteilhaft als Schrittmotor ausgebildet, so dass die Bewegung des Bildschirmträgers 7 und die damit einhergehende Bewegung des Ballastkörpers 12 präzise einstellbar ist.

### Bezugszeichenliste (Bestandteil der Beschreibung)

- 1: Einbaumöbel
- 2, 2': Bildschirmaufzugssanlage
- 3: Flachbildschirm
- 4: Aufzugsrichtung
- 5: Öffnung
- 6: Deckel
- 7: Bildschirmträger
- 8: Ende von 7
- 9: Vertikalführung
- 10: Stütze
- 11: Gewichtsausgleichsvorrichtung
- 12: Ballastkörper
- 13: Vertikalführung
- 14: Zugelement
- 15: oben liegende Umlenkrolle
- 16: unten liegende Umlenkrolle
- 17: Boden
- 18: erster Trum
- 19: zweiter Trum
- 20: Schelle
- 21: Klemmvorrichtung
- 22: Antriebsmotor
- 23: Achse
- 24: Getriebe
- 25: Gewindespindel
- 26: Antriebsmotor

## Patentansprüche

1. Bildschirmaufzugsanlage für Flachbildschirme (3) zur Anordnung in Möbeln oder Einbaumöbeln (1) mit einem in Aufzugsrichtung (4) beweglich angeordneten Bildschirmträger (7), welcher über einen Antriebsmotor (22, 26) bewegbar ist, mit einer dem Bildschirmträger (7) zugeordneten Gewichtsausgleichsvorrichtung (11), welche einen das Gewicht des Bildschirmträgers (7) kompensierenden und in Aufzugsrichtung (4) beweglichen Ballastkörper (12) und mindestens ein biegeschlaffes Zugelement (14) aufweist, welches über eine obenliegende Umlenkrolle (15) geführt ist und an dem einerseits der obenliegenden Umlenkrolle (15) der Bildschirmträger (7) hängt und andererseits der Ballastkörper (12) hängt, wobei das Zugelement (14) umlaufend ausgebildet ist und über die obenliegende Umlenkrolle (15) und eine untenliegende Umlenkrolle (16) läuft und der Antriebsmotor (22) eine der Umlenkrollen (15, 16) antreibt.

2. Bildschirmaufzugsanlage nach Anspruch 1,
**dadurch gekennzeichnet, dass**
das Gewicht des Ballastkörpers (12) auf das Gesamtgewicht einer aus Bildschirmträger (7) und Flachbildschirm (3) gebildeten Baugruppe abgestimmt ist.

3. Bildschirmaufzugsanlage nach einem der vorhergehenden Ansprüche,
**dadurch gekennzeichnet, dass**
der Ballastkörper (12) balkenförmig ausgebildet und quer bezüglich der Aufzugsrichtung (4) angeordnet ist.

4. Bildschirmaufzugsanlage nach einem der vorhergehenden Ansprüche,
**dadurch gekennzeichnet, dass**
der Bildschirmträger (7) und der Ballastkörper (12) jeweils in Vertikalführungen (9, 13) angeordnet sind.

5. Bildschirmaufzugsanlage nach einem der vorhergehenden Ansprüche,
**dadurch gekennzeichnet, dass**
die Gewichtsausgleichsvorrichtung (11) zwei parallel angeordnete Zugelemente (14) aufweist.

6. Bildschirmaufzugsanlage nach Anspruch 5,
**dadurch gekennzeichnet, dass**
die Zugelemente (14) mit ihren jeweiligen Umlenkrollen (15, 16) jeweils benachbart den außenliegenden Seiten des Bildschirmträgers (7) angeordnet sind.

7. Bildschirmaufzugsanlage nach einem der vorhergehenden Ansprüche,
**dadurch gekennzeichnet, dass**
der Antriebsmotor (22) eine untenliegende Umlenkrolle (16) antreibt.

8. Bildschirmaufzugsanlage nach einem der vorhergehenden Ansprüche,
**dadurch gekennzeichnet, dass**
der Antriebsmotor (22) über eine in Aufzugsrichtung (4) liegende Gewindespindel (25) auf den Bildschirmträger (7) wirkt.

9. Bildschirmaufzugsanlage nach Anspruch 8,
**gekennzeichnet durch**
einen auf das Zugelement (4) wirkenden Antriebsmotor (26) und einen über die Gewindespindel (25) wirkenden Antriebsmotor (26).

10. Bildschirmaufzugsanlage nach einem der vorhergehenden Ansprüche,
**dadurch gekennzeichnet, dass**
der Antriebsmotor (22, 26) ein Schrittmotor ist.

11. Bildschirmaufzugsanlage nach einem der vorhergehenden Ansprüche,
**dadurch gekennzeichnet, dass**
wenigstens die unten liegenden Umlenkrollen (16) an einer gemeinsamen umlaufenden Achse (23) angeordnet sind.

12. Bildschirmaufzugsanlage nach einem der vorhergehenden Ansprüche,
**dadurch gekennzeichnet, dass**
das Zugelement (14) ein Riemen ist.

## Claims

1. Screen lift system for flat screens (3) for arrangement in furniture or built-in furniture (1), having a screen support (7) which is arranged such that it can be moved in the lift direction (4) and can be moved by means of a drive motor (22, 26), having a weight compensation device (11) which is assigned to the screen support (7) and has a ballast body (12) which compensates for the weight of the screen support (7) and can be moved in the lift direction (4), and at least one flexurally slack tension element (14), which is guided over an upper guide pulley (15) and on which the screen support (7) hangs on the one hand from the upper guide pulley (15) and on the other hand from the ballast body (12), the traction element (14) being designed to rotate and running over the upper guide pulley (15) and a lower guide pulley (16), and the drive motor (22) driving one of the guide pulleys (15, 16).

2. Screen lift system according to claim 1, **characterised in that** the weight of the ballast body (12) is matched to the total weight of an assembly formed from screen support (7) and flat screen (3).

3. Screen lift installation according to one of the preceding claims, **characterised in that** the ballast body (12) is beam-shaped and is arranged transversely with respect to the lift direction (4).

4. Screen lift installation according to one of the preceding claims, **characterised in that** the screen support (7) and the ballast body (12) are each arranged in vertical guides (9, 13).

5. Screen lift installation according to one of the preceding claims, **characterised in that** the counterbalancing device (11) comprises two parallel tension elements (14).

6. Screen lift installation according to claim 5, **characterised in that** the traction elements (14) with their respective deflection rollers (15, 16) are each arranged adjacent to the outer sides of the screen support (7).

7. Screen lift installation according to one of the preceding claims, **characterised in that** the drive motor (22) drives a lower deflection pulley (16).

8. Screen lift installation according to one of the preceding claims, **characterised in that** the drive motor (22) acts on the screen support (7) via a threaded spindle (25) lying in the lift direction (4).

9. Screen lift installation according to claim 8, **characterised by** a drive motor (26) acting on the traction element (4) and a drive motor (26) acting via the threaded spindle (25).

10. Screen lift installation according to one of the preceding claims, **characterised in that** the drive motor (22, 26) is a stepper motor.

11. Screen lift installation according to one of the preceding claims, **characterised in that** at least the bottom guide rollers (16) are arranged on a common revolving axis (23).

12. Screen lift installation according to one of the preceding claims, **characterised in that** the traction element (14) is a belt.

## Revendications

1. Installation d'élévation d'écran pour des écrans plats (3) à disposer dans des meubles ou des meubles encastrés (1) avec un support d'écran (7) disposé de manière mobile dans le sens de l'élévation (4), qui peut être déplacé par un moteur d'entraînement (22, 26), avec un dispositif d'équilibrage de poids (11) associé au support d'écran (7), qui présente un corps de lest (12) compensant le poids du support d'écran (7) et mobile dans le sens de l'élévation (4) et au moins un élément de traction (14) flexible, qui est guidé par l'intermédiaire d'une poulie de renvoi (15) située en haut et auquel est suspendu, d'une part, le support d'écran (7) de la poulie de renvoi (15) située en haut et, d'autre part, le corps de lest (12), l'élément de traction (14) étant réalisé en rotation et passant sur la poulie de renvoi (15) située en haut et sur une poulie de renvoi (16) située en bas et le moteur d'entraînement (22) entraînant l'une des poulies de renvoi (15, 16).

2. Installation d'ascenseur à écran selon la revendication 1, **caractérisé en ce que** le poids du corps de ballast (12) est adapté au poids total d'un ensemble formé par le support d'écran (7) et l'écran plat (3).

3. Installation d'ascenseur à écran selon l'une des revendications précédentes, **caractérisé en ce que** le corps de ballast (12) est en forme de poutre et est disposé transversalement par rapport à la direction de l'ascenseur (4).

4. Installation d'ascenseur à écran selon l'une des revendications précédentes, **caractérisé en ce que** le support d'écran (7) et le corps de ballast (12) sont respectivement disposés dans des guides verticaux (9, 13).

5. Installation d'ascenseur à écran selon l'une des revendications précédentes, **caractérisé en ce que** le dispositif d'équilibrage de poids (11) présente deux éléments de traction (14) disposés parallèlement.

6. Installation d'ascenseur à écran selon la revendication 5, **caractérisé en ce que** les éléments de traction (14) avec leurs poulies de renvoi respectives (15, 16) sont disposés respectivement au voisinage des côtés extérieurs du support d'écran (7).

7. installation d'ascenseur à écran selon l'une des revendications précédentes, **caractérisé en ce que** le moteur d'entraînement (22) entraîne une poulie de renvoi (16) située en bas.

8. Installation d'ascenseur à écran selon l'une des revendications précédentes, **caractérisé en ce que** le moteur d'entraînement (22) agit sur le support d'écran (7) par l'intermédiaire d'une broche filetée (25) située dans le sens de l'ascenseur (4).

9. Installation d'ascenseur à écran selon la revendication 8, **caractérisé par** un moteur d'entraînement (26) agissant sur l'élément de traction (4) et un moteur d'entraînement (26) agissant par l'intermédiaire de la tige filetée (25).

10. Installation d'ascenseur à écran selon l'une des revendications précédentes, **caractérisé en ce que** le moteur d'entraînement (22, 26) est un moteur pas à pas.

11. installation d'ascenseur à écran selon l'une des revendications précédentes, **caractérisé en ce que** au moins les poulies de renvoi (16) situées en bas sont disposées sur un axe de rotation commun (23).

12. Installation d'ascenseur à écran selon l'une des revendications précédentes, **caractérisé en ce que** l'élément de traction (14) est une courroie.
